# EUROPÄISCHE PATENTSCHRIFT

(11) **EP 3 107 370 B1**
(45) Veröffentlichungstag und Bekanntmachung des Hinweises auf die Patenterteilung: **01.05.2019**
(21) Anmeldenummer: 16736366.2
(22) Anmeldetag: 04.05.2016
(51) Int. Cl.: A01G 7/04, A01G 20/00

(54) **VERFAHRBARES RASENFLÄCHENWACHSTUMSSYSTEM**
MOBILE GREEN GROWING SYSTEM
SYSTÈME MOBILE STIMULANT LA CROISSANCE D'UNE PELOUSE

(30) Priorität: 12.05.2015 DE 102015005947; 06.10.2015 DE 102015012860
(43) Veröffentlichungstag der Anmeldung: 28.12.2016
(73) Patentinhaber: TSM GmbH, 52222 Stolberg (DE)
(72) Erfinder: TSIVIKIS, Georg, 52222 Stolberg (DE)
(74) Vertreter: Castell, Klaus
(86) Internationale Anmeldenummer: PCT/DE2016/000186
(87) Internationale Veröffentlichungsnummer: WO 2016/180388

(56) Entgegenhaltungen:
- EP-A2- 0 561 193
- WO-A1-00/57689
- WO-A1-2011/086499
- WO-A1-2015/028883
- WO-A2-2008/008342
- CN-Y- 201 150 203
- DE-B3-102012 112 192
- GB-A- 2 226 939
- US-A1- 2001 035 468
- US-A1- 2007 081 328
- thefacup: "Wembley Pitch - FA Cup semi final preparations | FATV", , 12. April 2012 (2012-04-12), Seite 1, XP054976735, Gefunden im Internet: URL:https://www.youtube.com/watch?v=yHNxCz UBnNQ&feature=youtu.be [gefunden am 2016-08-26]
- Anonymous: "Elektromagnetisches Spektrum - Wikipedia", , 14 August 2011 (2011-08-14), XP055524792, Retrieved from the Internet: URL:https://de.wikipedia.org/wiki/Elektrom agnetisches_Spektrum [retrieved on 2018-11-19]

## Beschreibung

Die Erfindung betrifft ein mobiles Beleuchtungssystem mit einem verfahrbaren Gestell und einem Panel das UV-Strahler und Wasserdüsen aufweist.

Für die Beleuchtung von Rasenflächen wie beispielsweise in Fußballstadien oder auf Golfplätzen, wurden Beleuchtungssysteme mit einem verfahrbaren Gestell und Wasserdüsen vorgeschlagen, um eine definierte Beleuchtung über einen bestimmten Zeitraum zu ermöglichen. Um das Pflanzenwachstum anzuregen, können derartige Beleuchtungssysteme ein Panel mit LED-Strahlern aufweisen. Dies führt zu einer Ausleuchtung des Bodens und dadurch zu einem intensiveren Pflanzenwachstum.

Ein derartiges Beleuchtungssystem ist aus der WO 2015/028883 bekannt. Dort werden für die Bewässerung von Pflanzen Sprinkler und für die Beleuchtung unterschiedliche Lichtquellen vorgeschlagen, die speziell auf die Art der beleuchteten Pflanzen angepasst sind.

Die WO 2011/086499 zeigt wie eine Rasenfläche mit thermischer Konvektion erwärmt werden kann.

Der Erfindung liegt die Aufgabe zugrunde, ein derartiges mobiles Beleuchtungssystem weiterzuentwickeln.

Diese Aufgabe wird mit einem mobilen Beleuchtungssystem gelöst, bei dem das Panel unabhängig von den UV-Strahlern verwendbare Infrarot-Strahler aufweist, um einen Rasen oder einen Boden zumindest an seiner Oberfläche zu erwärmen und um somit Beleuchtung durch die LED-Strahler, Erwärmung durch die Infrarotstrahler und Bewässerung durch die Wasserdüsen zu gewährleisten.

Es hat sich herausgestellt, dass auf einfache Art und Weise an den Paneelen, an denen die LED-Strahler angebracht sind, zusätzlich Infrarotstrahler eingesetzt werden können, um das Lichtspektrum in Hinblick auf die Wellenlänge zu erweitern. Dadurch ermöglicht das System drei Funktionen: Beleuchtung, Erwärmung und Bewässerung.

Gerade in Fußballstadien entstehen bauartbedingt Bereiche, die schlechter mit Sonnenlicht versorgt sind als andere Bereiche. Dies führt auf der Rasenfläche zu einem unterschiedlichen Rasenwachstum, auch wenn optimale Wärme und Feuchteverhältnisse vorliegen.

Die LED-Strahler, die als UV-Strahler ausgebildet sind und ein die Infrarotstrahler ergänzendes Lichtspektrum aufweisen, ermöglichen es, während der Bewässerung und Erwärmung die Rasenfläche zu Beleuchten. Dabei können insbesondere diejenigen Rasenbereiche beleuchtet werden, die häufig beschattet sind.

Eine spezielle Auswahl der Strahler ist darauf ausgerichtet, einerseits den Boden zumindest an seiner Oberfläche zu erwärmen und andererseits den Rasenpflanzen eine optimale Beleuchtung zu bieten. Durch eine feine Zerstäubung des Wassers an den Wasserdüsen kann bewirkt werden, dass das zerstäubte Wasser auf dem Weg zwischen Düse und Rasen um mehrere Grad Celsius erwärmt wird. Dies ist insbesondere im Winter sehr vorteilhaft für das Wachstum des Rasens. Dabei kann ein Nebel erzeugt werden, der zwar den Durchtritt der Strahlung von den Strahlern zum Rasen behindert aber dabei das versprühte Wasser erwärmt und dadurch eine schonende Erwärmung des Rasens bewirkt, die beim Eindringen des Wassers in den Boden auch eine obere Schicht des Bodens erwärmt.

Besonders bevorzugt ist daher ein Verfahren zum Betreiben des mobilen Beleuchtungssystems, bei dem die Wasserdüsen und der Wasserdruck derart eingestellt werden, dass das Wasser vernebelt wird.

Je nach Jahreszeit und Lichtverhältnissen, können in der Winterzeit Infrarotstrahler verwendet werden, um den Rasen zu erwärmen, und im Sommer kann das System auch ausschließlich mit UV-Strahlern und Bewässerung betrieben werden.

Es ist vorteilhaft, wenn mit dem mobilen Beleuchtungssystem eine große Rasenfläche gleichmäßig beleuchtet, erwärmt und bewässert werden kann. Daher wird vorgeschlagen, dass das Panel mehrere ausklappbare Panelelemente für eine Spannweite von mehr als 1 Meter und vorzugsweise von mehreren Metern aufweist. Die ausklappbaren Panelelemente ermöglichen es, dass verfahrbare Gestell mit dem Panel mit eingeklappten Panelelementen zu lagern und für den Einsatz die Panelelemente derart auszuklappen, dass sie eine waagerechte plane Fläche von mehreren Metern überbrücken können. Das Gestell kann besonders bevorzugt über 10 m ausgeklappt werden und alleine über das Spielfeld fahren, um eine optimale Ausleuchtung zu gewährleisten. Für die Einlagerung des Beleuchtungssystems können die Panelelemente eingeklappt werden und das System kann dann vom Spielfeld gefahren werden.

Sofern die zu behandelnden Rasenflächen größer sind als das zur Verfügung stehende Panel, wird das Panel mit dem verfahrbaren Gestellt über die Rasenfläche gefahren. Dabei ist es in der Regel nicht zu vermeiden, die zum Gestell führende Leitung, die in der Regel Wasser und Strom leitet, über die Rasenfläche zu führen. Dies führt jedoch zu einer Beeinträchtigung des Rasenwachstums in den Bereichen, in denen die Leitung auf dem Rasen liegt.

Daher wird eine Haspel vorgeschlagen, die eine zum Gestell führende Leitung aufwickelt. Dies ermöglicht es, die Leitung immer möglichst kurz zu halten und vorzugsweise derart gespannt zu halten, dass sie nicht auf der Rasenfläche aufliegt. Sofern die Strecke der Leitung zwischen Gestell und Leitungszuführung sehr lang wird, kann die Leitung durch einfache Ständer beabstandet zur Rasenfläche gehalten werden. Ein gradliniges Verfahren des Gestells in Verbindung mit einer stationären Haspel führt zu einem definierten Verlauf der Leitung und ermöglicht es, die Leitung oberhalb der Rasenfläche abzustützen.

Während das Gestell auf der Rasenfläche vorzugsweise auf einer geraden Linie verfahren wird, ist es jedoch notwendig, das Gestell auf die Rasenfläche zu verfahren und gegebenenfalls auch mehrere Gestelle auf der Rasenfläche zueinander zu positionieren. Hierfür ist es vorteilhaft, wenn das Gestell eine Deichsel aufweist.

Wenn das System mit einer Steuerung ausgerüstet wird, wird es möglich, es vollautomatisch ferngesteuert zu bewegen. Hierzu werden vorzugsweise Steuerungen mit Ortserkennung wie GPS- oder GNSS-Systeme und Baggersteuerungssysteme eingesetzt.

Sowie das Beleuchtungssystem auf der Rasenfläche positioniert ist, ist eine langsame kontinuierliche geradlinige Bewegung des Gestells und somit des Panels relativ zur Rasenfläche gefordert. Hierfür ist es vorteilhaft, wenn das Gestell einen und vorzugsweise zwei Motoren aufweist. Je nach Ausbildung kann das Gestell auch mehrere Motoren aufweisen. Dies ermöglicht es, nicht nur das Gestell geradlinig über den Rasen zu fahren sondern auch vom Rasen in eine Parkposition zu fahren, um die Rasenfläche für den Spielbetrieb freizugeben.

Eine einfache, schnelle und individuelle Bewegung des Gestells wird durch eine Einzelradaufhängung ermöglicht. Dabei sollten die Räder so ausgebildet sein, dass sie wenig Druck auf die Rasenfläche ausüben. Daher wird vorgeschlagen, dass das Gestell Gummireifen aufweist. Derartige Gummireifen haben nur einen geringen Luftdruck, damit die Radoberfläche mit einem größeren Bereich der Rasenfläche in Berührung tritt.

Ein System für eine größere Rasenfläche weist mehrere verfahrbare Gestelle jeweils mit einem Panel auf, die gemeinsam bewegbar sind. Diese Gestelle werden bevorzugt ferngesteuert über die Rasenfläche bewegt, wobei die Paneele unterschiedlicher verfahrbarer Gestelle miteinander verbunden werden können und/oder derart synchron verfahren werden, dass sie wie eine gemeinsame Fläche relativ zur Rasenfläche bewegt werden.

Einerseits ist ein Abstand von 1 Meter bis etwa 1,5 Meter zwischen der Rasenfläche und dem Panel besonders vorteilhaft, um das Licht und das Wasser vom Panel besonders gleichmäßig auf der darunterliegenden Rasenfläche zu verteilen. Andererseits ist es vorteilhaft, wenn die Gestelle auch manuell bewegt werden können, ohne dass das Bedienpersonal durch die Paneele behindert wird. Daher wird vorgeschlagen, dass das Panel am Gestell von ca. 1,40 Meter auf ca. 1,90 Meter und vorzugsweise von 1,20 Meter auf 2,00 Meter höhenverstellbar ist. Dies ermöglicht es, einerseits das Panel in einem optimalen Abstand zur Rasenfläche zu halten und andererseits den Raum unter dem Panel zu betreten, um das Gestell zu verschieben oder Wartungsarbeiten durchzufuhren.

Im Winter können die Grashalme des Rasens überfroren sein. Eiskristalle an den Halmen oder sogar eine Eisschicht führt dazu, dass die Halme besonders bruchanfällig sind. Daher wird vorgeschlagen, dass das Gestell Reifen aufweist, mit denen es über den Boden fahrbar ist, und in deren Fahrtrichtung eine Heizeinrichtung auf den Boden gerichtet ist. Dies ermöglicht es, partiell direkt vor den Reifen oder auch in Fahrtrichtung weiter von den Reifen oder Rädern entfernt den Boden mit den Grashalmen zu erwärmen. Wenn nun die Reifen über den vorgewärmten Rasen rollen, können sich die Halme umbiegen, ohne zu brechen.

Da dieses Problem vor allem im Winter auftritt und eine Heizeinrichtung zu zusätzlichem Gewicht führt, wird vorgeschlagen, dass die Heizeinrichtung abnehmbar ist. Sie kann somit bei Frost an das Gestell angeschraubt oder angehängt werden und im Sommer eingelagert werden.

Ein Verfahren zur Verwendung eines derartigen Beleuchtungssystems sieht vor, dass die Temperatur des Bodens, auf den der Strahler gerichtet ist, gemessen wird und abhängig von dieser Temperatur der Strahler geregelt wird. Die Temperatur kann dabei direkt unter dem Panel gemessen werden oder es wird eine Referenztemperatur an einer anderen Stelle des Rasens ermittelt, um die Strahlerintensität an die Bodeneigenschaften anzupassen.

Häufig ist nicht nur die einfach zu messende Temperatur der Bodenoberfläche relevant sondern auch die Temperatur im Boden. Daher wird vorzugsweise mit einer Bodenlanze die Temperatur im Boden der Rasenfläche gemessen. Dabei kann auch die Feuchte und die Salzkonzentration des Bodens ermittelt werden. Die so ermittelten Werte dienen dazu, die Geschwindigkeit des mobilen Beleuchtungssystems, die Intensität der LED-Strahler und der Infrarotstrahler und/oder die Strömungsgeschwindigkeit an den Wasserdüsen einzustellen. Durch die Optimierung der Parameter, insbesondere an den Lampen, kann der Energieverbrauch des mobilen Beleuchtungssystems gesenkt werden. Als Verfahren zum Betreiben des mobilen Beleuchtungssystems wird daher vorgeschlagen, dass die Temperatur des Bodens, auf den der Strahler gerichtet ist, gemessen wird und abhängig von dieser Temperatur der Strahler geregelt wird.

In der Praxis hat sich herausgestellt, dass ein Gestell mit einer vorderen und einer hinteren Deichsel besonders einfach lenkbar ist. Ein Verriegelungsmechanismus ermöglicht es, das Gestell bei verriegelter Deichsel auf einer geraden Linie zu bewegen.

Anstelle eines mit einem Motor betriebenen Gestells, kann das Beleuchtungssystem auch auf einer geraden Linie über die Rasenfläche gezogen werden. Dies kann mit einem Seil erfolgen, das auf einer am Spielfeldrand stationär angeordneten Haspel aufgewickelt ist. Besonders bevorzugt, dient die Haspel für die Strom- und Wasserleitung auch dazu, dass Gestell über die Rasenfläche zu ziehen.

Ein Gestell mit einem Panel des mobilen Beleuchtungssystems, ist in der Zeichnung dargestellt und wird im Folgenden näher beschrieben. Es zeigt:
- Figur 1: eine dreidimensionale Ansicht des mobilen Beleuchtungssystems,
- Figur 2: eine Querseitenansicht des in Figur 1 gezeigten Beleuchtungssystems,

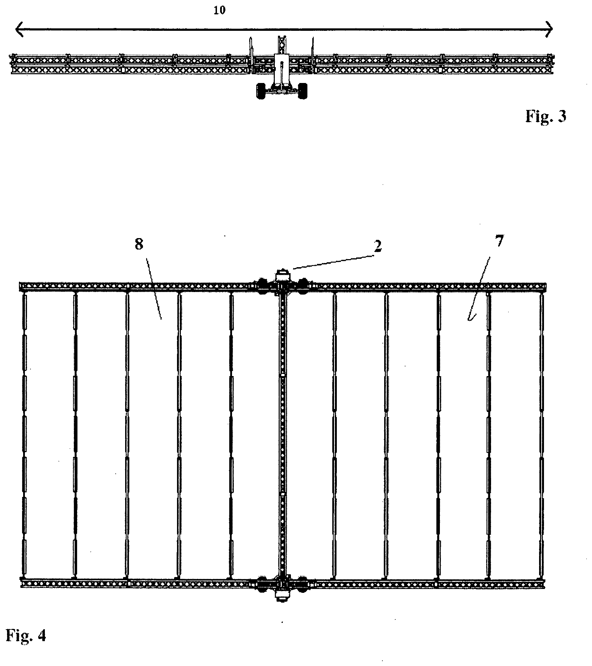

- Figur 3: eine Längsseitenansicht des in Figur 1 gezeigten Beleuchtungssystems,
- Figur 4: eine Draufsicht auf das in Figur 1 gezeigte Beleuchtungssystem,

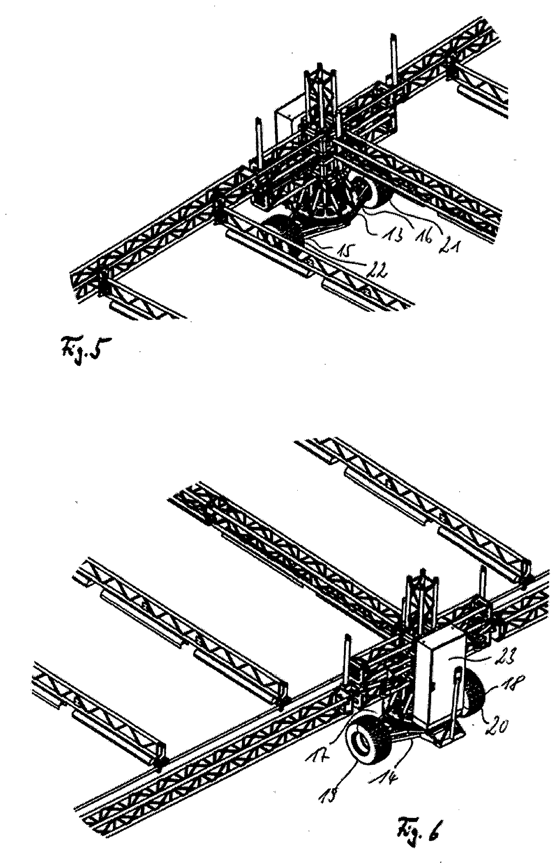

- Figur 5: ein vergrößertes erstes Detail aus Figur 1,
- Figur 6: ein vergrößertes zweites Detail aus Figur 1,
- Figur 7: eine Ansicht entsprechend Figur 3 mit Heizeinrichtung und
- Figur 8: eine Ansicht entsprechend Figur 2 mit Heizeinrichtung

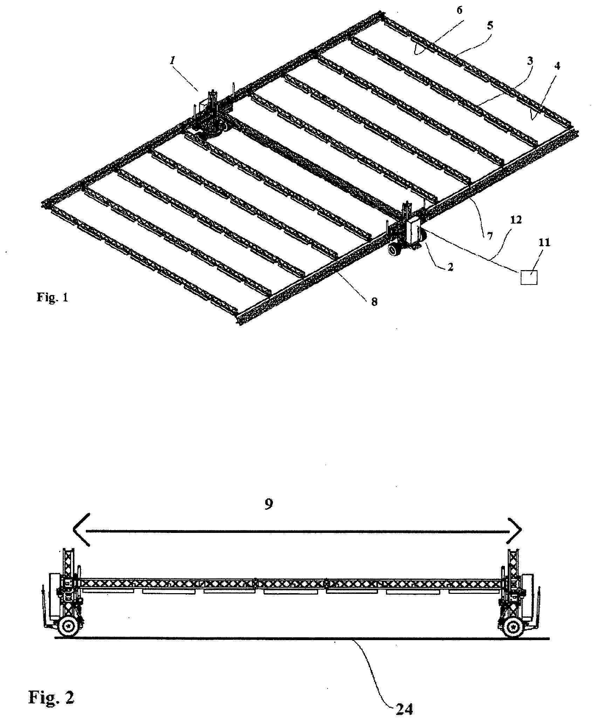

Das in Figur 1 gezeigte Beleuchtungssystem 1 hat ein verfahrbares Gestell 2, auf dem ein Panel 3 befestigt ist. Dieses Panel 3 hat Infrarotstrahler 4, Wasserdüsen 5 und LED-Strahler 6. Diese LED-Strahler 6 sind als UV-Strahler ausgebildet.

Das Panel 3 besteht aus zwei ausklappbaren Panelelementen 7, 8, die nach oben klappbar am verfahrbaren Gestell 2 befestigt sind.

In ausgeklapptem Zustand decken die Paneele eine Fläche von etwa 22 Meter mal 14 Meter ab. Dadurch hat das Beleuchtungssystem eine Spannweite in einer Richtung von etwa 22 Metern und in der orthogonalen Richtung von etwa 14 Metern.

In Figur 1 ist schematisch eine Haspel 11 gezeigt, die über eine Leitung 12 mit dem Gestell 2 in Verbindung steht. Diese Haspel 11 ist so ausgebildet, dass sie die zwischen der Haspel 11 und dem Gestell 2 verlaufende Leitung immer möglichst gespannt hält. Dadurch liegt immer nur die minimale Leitungslänge auf dem Boden beziehungsweise auf dem Rasen. Vorzugsweise spannt die Haspel 11 die Leitung derart, dass die gespannte Leitung nicht auf dem Rasen aufliegt. Bei größeren zu überbrückenden Strecken zwischen Haspel 11 und Gestell 2, kann die Leitung 12 mittels Ständer (nicht gezeigt) vom Rasen beabstandet hochgehalten werden.

Die Leitung 12 leitet einerseits Wasser für die Wasserdüsen 5 an den ausklappbaren Panelelementen 7, 8 und außerdem Strom für die Infrarotstrahler 4 und die LED-Strahler 6, die an den ausklappbaren Panelelementen 7, 8 und am verfahrbaren Gestell 2 befestigt sind.

Das Gestell 2 hat an gegenüberliegenden Enden jeweils eine Deichsel 13, 14, die motorisch angetrieben ist. An den Enden jeder Deichsel 13, 14 befinden sich Einzelradaufhängungen 15, 16 bzw. 17, 18 die Gummireifen 19, 20, 21, 22 halten.

Eine Steuerung 23 erlaubt es mit mehreren Motoren (nicht gezeigt) das Gestell 2 ferngesteuert zu verfahren und das Panel 3 relativ zum Boden 24 auf und ab zu bewegen.

Bei der Verwendung des Beleuchtungssystems wird das Gestell mit den Paneelen zunächst manuell und Motor unterstützt, auf eine zu behandelnde Rasenfläche gefahren. Dann wird das Gestell 2 über die Leitung 12 mit der Haspel 11 verbunden. Auf einem Fußballfeld werden vorzugsweise mehrere Gestelle jeweils mit einem Panel nebeneinander angeordnet, sodass sie gleichzeitig langsam über das Fußballfeld gefahren werden können.

Dabei wird über die Wasserdüsen 5 vernebeltes Wasser abgegeben, dass die Rasenfläche befeuchtet. Die Infrarotstrahler 4 erwärmen das vernebelte Wasser und den Boden 24. Gleichzeitig beleuchten die LED-Strahler den Boden mit bestimmten Lichtwellenlängen, die ein Wachstum des Rasens fördern. Mit dem vernebelten Wasser, das durch die Infrarotstrahler 4 erwärmt wird, kann einerseits die Feuchtigkeit der Rasenfläche eingestellt werden und andererseits wird die Rasenfläche erwärmt.

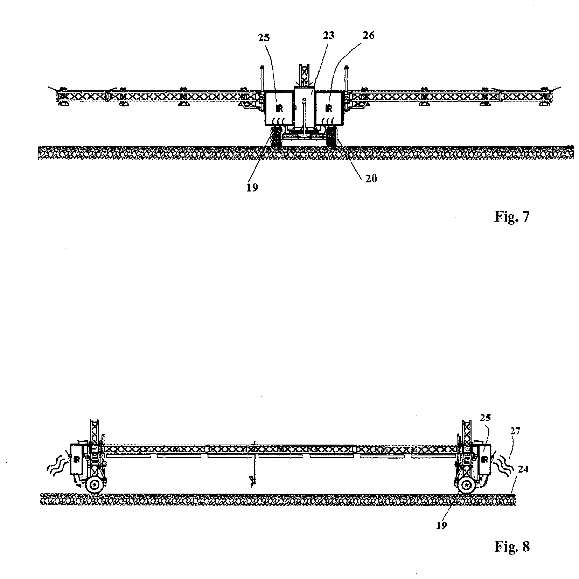

Rechts und links der Steuerung 23 ist in dem in den Figuren 7 und 8 gezeigten Ausführungsbeispiel jeweils eine Heizeinrichtung 25 und 26 angehängt. Diese Heizeinrichtungen sind in der kalten Jahreszeit so angeordnet, dass Infrarotstrahlung 27 in dem Bereich vor den Rädern 19, 20 auf den Boden 24 strahlt, um dort den Rasen zu erwärmen und einen Bruch von gefrorenen Halmen zu vermeiden.

## Patentansprüche

1. Mobiles Beleuchtungssystem (1) mit einem verfahrbaren Gestell (2) und einem Panel (3), das UV-Strahler (6) und Wasserdüsen (5) aufweist, **dadurch gekennzeichnet, dass** das Panel unabhängig von den UV-Strahlern (6) verwendbare Infrarotstrahler (4) aufweist, um das Lichtspektrum in Hinblick auf die Wellenlänge zu erweitern, um einen Rasen oder einen Boden zumindest an seiner Oberfläche zu erwärmen und um somit Beleuchtung durch die UV-Strahler, Erwärmung durch die Infrarotstrahler und Bewässerung durch die Wasserdüsen zu gewährleisten.

2. Mobiles Beleuchtungssystem nach Anspruch 1, **dadurch gekennzeichnet, dass** das Panel (3) mehrere ausklappbare Panelelemente (7, 8) für eine Spannweite (9, 10) von mehr als 1 m, vorzugsweise von mehreren Metern und besonders bevorzugt von mehr als 10 m aufweist.

3. Mobiles Beleuchtungssystem nach einem der vorhergehenden Ansprüche, ***dadurch gekennzeichnet, dass*** es eine Haspel (11) aufweist, die eine zum Gestell (2) führende Leitung (12) aufwickelt.

4. Mobiles Beleuchtungssystem nach ***dadurch gekennzeichnet, dass*** die Leitung (12) Wasser und Strom leitet.

5. Mobiles Beleuchtungssystem nach einem der vorhergehenden Ansprüche, ***dadurch gekennzeichnet, dass*** das Gestell (2) eine Deichsel (13, 14) aufweist.

6. Mobiles Beleuchtungssystem nach einem der vorhergehenden Ansprüche, ***dadurch gekennzeichnet, dass*** das Gestell (2) zwei Motoren aufweist.

7. Mobiles Beleuchtungssystem nach einem der vorhergehenden Ansprüche, ***dadurch gekennzeichnet, dass*** das Gestell (2) Einzelradaufhängungen (15, 16, 17, 18) aufweist.

8. Mobiles Beleuchtungssystem nach einem der vorhergehenden Ansprüche, ***dadurch gekennzeichnet, dass*** das Gestell (2) Gummireifen (19, 20, 21, 22) aufweist.

9. Mobiles Beleuchtungssystem nach einem der vorhergehenden Ansprüche, ***dadurch gekennzeichnet, dass*** es mehrere verfahrbare Gestelle (2) jeweils mit einem Panel (3) aufweist, die gemeinsam bewegbar sind.

10. Mobiles Beleuchtungssystem nach einem der vorhergehenden Ansprüche, ***dadurch gekennzeichnet, dass*** das Panel (3) am Gestell von ca. 1,4 m auf ca. 1,9 m, vorzugsweise von 1,2 m auf 2 m höhenverstellbar ist.

11. Mobiles Beleuchtungssystem nach einem der vorhergehenden Ansprüche, **dadurch gekennzeichnet, dass** das Gestell Reifen aufweist, mit denen es über einen Boden fahrbar ist, und in deren Fahrtrichtung eine Heizeinrichtung auf den Boden gerichtet ist, so dass partiell direkt vor den Reifen oder auch in Fahrtrichtung weiter von den Reifen oder Rädern entfernt der Boden mit den Grashalmen erwärmt werden kann und die Reifen über den vorgewärmten Rasen rollen.

12. Mobiles Beleuchtungssystem nach Anspruch 11, **dadurch gekennzeichnet, dass** die Heizeinrichtung abnehmbar ist.

13. Verfahren zum Betreiben eines mobilen Beleuchtungssystems (1) nach einem der vorgehenden Ansprüche, **dadurch gekennzeichnet, dass** die Temperatur des Bodens (24), auf den die Strahler (4, 6) gerichtet sind, gemessen wird und mindestens ein Strahler (4, 6) abhängig von dieser Temperatur geregelt wird.

14. Verfahren zum Betreiben eines mobilen Beleuchtungssystems nach einem der vorhergehenden Ansprüche, ***dadurch gekennzeichnet, dass*** die Wasserdüsen (5) und der Wasserdruck derart eingestellt werden, dass das Wasser vernebelt wird.

## Claims

1. Mobile lighting system (1) comprising a movable frame (2) and a panel (3), which has UV emitters (6) and water nozzles (5), ***characterized in that*** the panel has infrared emitters (4) that can be used independently of the UV emitters (6), in order to extend the light spectrum with regard to the wavelength in order to heat a lawn or a floor at least on the surface thereof and therefore to ensure illumination by the UV emitters, heating by the infrared emitters and watering by the water nozzles.

2. Mobile lighting system according to Claim 1, ***characterized in that*** the panel (3) has a plurality of fold-out panel elements (7, 8) for a span (9, 10) of more than 1 m, preferably of several metres and particularly preferably of more than 10 m.

3. Mobile lighting system according to any one of the preceding claims, ***characterized in that*** it has a reel (11) which a tube (12) leading to the frame (2) is wound around.

4. Mobile lighting system according to Claim 3, ***characterized in that*** the tube (12) conducts water and electricity.

5. Mobile lighting system according to any one of the preceding claims, ***characterized in that*** the frame (2) has a draw shaft (13, 14).

6. Mobile lighting system according to any one of the preceding claims, ***characterized in that*** the frame (2) has two motors.

7. Mobile lighting system according to any one of the preceding claims, ***characterized in that*** the frame (2) has individual wheel suspensions (15, 16, 17, 18).

8. Mobile lighting system according to any one of the preceding claims, ***characterized in that*** the frame (2) has rubber tyres (19, 20, 21, 22).

9. Mobile lighting system according to any one of the preceding claims, ***characterized in that*** it has a plurality of movable frames (2) each with a panel (3), which can be moved jointly.

10. Mobile lighting system according to any one of the preceding claims, ***characterized in that*** the height of the panel (3) on the frame is adjustable from approximately 1.4 m to approximately 1.9 m, preferably from 1.2 m to 2 m.

11. Mobile lighting system according to any one of the preceding claims, ***characterized in that*** the frame has tyres with which it can be guided over an area of ground, and in the direction of travel thereof a heating device is directed at the ground, so that the ground with the grass stems can be heated partially either directly in front of the tyres or else further away from the tyres or wheels in the direction of travel, and the tyres roll over the pre-heated lawn.

12. Mobile lighting system according to Claim 11, ***characterized in that*** the heating device is removable.

13. Method for operating a mobile lighting system (1) according to any one of the preceding claims, ***characterized in that*** the temperature of the ground (24) on to which the emitters (4, 6) are directed is measured and at least one emitter (4, 6) is controlled as a function of said temperature.

14. Method for operating a mobile lighting system according to any one of the preceding claims, ***characterized in that*** the water nozzles (5) and the water pressure are adjusted in such a way that the water is nebulised.

## Revendications

1. Système d'éclairage mobile (1) pourvu d'un châssis (2) déplaçable et d'un panneau (3), qui comporte des émetteurs d'UV (6) et des gicleurs d'eau (5), ***caractérisé en ce que*** le panneau comporte des émetteurs d'infra-rouges (4) utilisables indépendamment des den émetteurs d'UV (6) pour élargir le spectre lumineux au niveau de la longueur d'ondes, dans le but de chauffer un gazon ou un sol au moins en surface et pour assurer ainsi de l'éclairage par les émetteurs d'UV, du chauffage par les émetteurs d'infra-rouges et de l'arrosage par les gicleurs d'eau.

2. Système d'éclairage mobile selon la revendication 1, ***caractérisé en ce que*** le panneau (3) comporte plusieurs éléments de panneau (7, 8) déployables, pour une envergure (9, 10) de plus d'1 m, de préférence de plusieurs mètres et de manière particulièrement préférentielle, de plus de 10 m.

3. Système d'éclairage mobile selon l'une quelconque des revendications précédentes, ***caractérisé en ce qu***'il comporte un dévidoir (11) qui enroule un conduit (12) menant vers le châssis (2).

4. Système d'éclairage mobile selon la revendication 3, ***caractérisé en ce que*** le conduit (12) dirige de l'eau et du courant.

5. Système d'éclairage mobile selon l'une quelconque des revendications précédentes, ***caractérisé en ce que*** le châssis (2) comporte une barre de traction (13, 14).

6. Système d'éclairage mobile selon l'une quelconque des revendications précédentes **caractérisé en ce que** le châssis (2) comporte deux moteurs.

7. Système d'éclairage mobile selon l'une quelconque des revendications précédentes, ***caractérisé en ce que*** le châssis (2) comporte des suspensions indépendantes (15, 16, 17, 18).

8. Système d'éclairage mobile selon l'une quelconque des revendications précédentes, ***caractérisé en ce que*** le châssis (2) comporte des pneus en caoutchouc (19, 20, 21, 22).

9. Système d'éclairage mobile selon l'une quelconque des revendications précédentes, ***caractérisé en ce qu*'**il comporte plusieurs châssis (2) déplaçables, pourvu chacun d'un panneau (3), qui sont mobiles en commun.

10. Système d'éclairage mobile selon l'une quelconque des revendications précédentes, ***caractérisé en ce que*** le panneau (3) est réglable en hauteur sur le châssis d'env. 1,4 m à env. 1,9 m, de préférence de 1,2 m à 2 m.

11. Système d'éclairage mobile selon l'une quelconque des revendications précédentes, ***caractérisé en ce que*** le châssis comporte des pneus, à l'aide desquels il est déplaçable sur un sol et dans la direction de déplacement desquels, un système de chauffage est orienté vers le sol, de sorte que partiellement, directement à l'avant des pneus ou également dans la direction de déplacement, de manière plus éloignée des pneus ou des roues, le sol avec les brins d'herbe puisse être chauffé et que les pneus roulent sur le gazon préchauffé.

12. Système d'éclairage mobile selon la revendication 11, ***caractérisé en ce que*** le système de chauffage est amovible.

13. Procédé, destiné à faire fonctionner un système d'éclairage mobile (1) selon l'une quelconque des revendications précédentes, ***caractérisé en ce qu*'**on mesure la température du sol (24), sur lequel les émetteurs (4, 6) sont orientés et en ce qu'on règle au moins un émetteur (4, 6) en fonction de ladite température.

14. Procédé, destiné à faire fonctionner un système d'éclairage mobile selon l'une quelconque des revendications précédentes, ***caractérisé en ce qu***'on règle les gicleurs d'eau (5) et la pression de l'eau de telle sorte que l'eau soit nébulisée.
